Europäisches Patentamt

European Patent Office

Office européen des brevets

(19)

(11) **EP 1 460 611 A1**

(12) **EUROPEAN PATENT APPLICATION**

(43) Date of publication:
**22.09.2004 Bulletin 2004/39**

(51) Int Cl.⁷: **G09G 3/28**, H04N 13/00

(21) Application number: **03290658.8**

(22) Date of filing: **17.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK RO**

(71) Applicant: **DEUTSCHE THOMSON-BRANDT
GMBH
78048 Villingen-Schwenningen (DE)**

(72) Inventors:
• **Weitbruch, Sebastien
78087 Monchweiler (DE)**

• **Thebault, Cedric
78050 Villingen (DE)**
• **Huet, Benoit
56220 Peillac (FR)**

(74) Representative: **Ruellan-Lemonnier, Brigitte
THOMSON multimedia,
46 quai A. Le Gallo
92648 Boulogne Cédex (FR)**

(54) **Method and device for compensating the phosphor lag of display devices**

(57)     This invention aims to suppress the ghost image produced by the phosphor lag effect which normally prevents the displaying of stereoscopic pictures. It consists in modelling the comportment of a sub-field and then evaluating the echo of each level by adding the echo of the sub-fields (21, 22, 23). Moreover, the echo of a sub-field is calculated according to its time position in the frame and to an accurate model of phosphor behaviour. In order to eliminate the ghost image due to the persistence of an image, the calculated echo has to be subtracted (26) from the next image to be displayed. It enables to remove the ghost image and permits the 3D effect to be rendered. However, the contrast of the image is all the more reduced, as the compensation is high. A compromise between the phosphor lag and the reduction of the contrast has consequently to be found.

**Fig. 14**

**Description**

The present invention relates to a method and an apparatus for processing video data for displaying on a display means with luminous elements including the steps of providing a first video signal, adding an offset brightness value to the first video signal in order to obtain a shifted signal, calculating a ghost video signal on the basis of a second video signal preceding the first video signal and subtracting the ghost video signal from the shifted signal.

Background

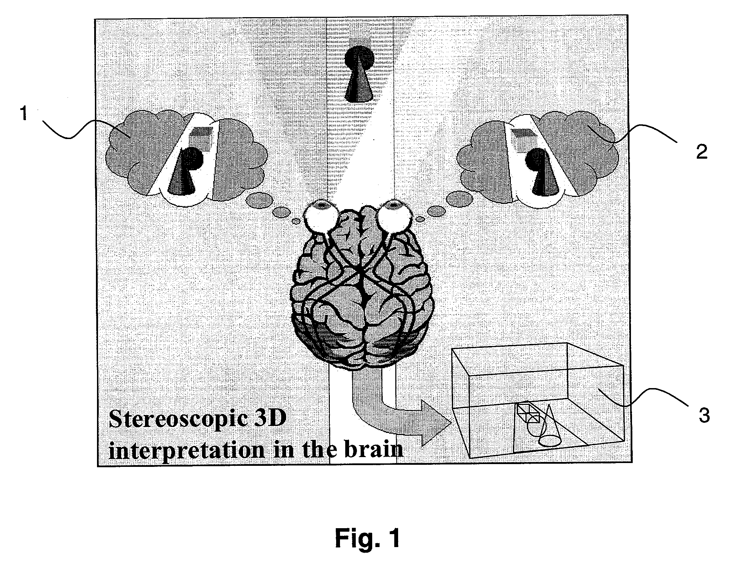

At first the stereoscopic effect in the Human Vision shall be explained along with Figure 1. Thanks to the close side-by-side positioning, each eye of the human visual system takes a view of the same scene from a slightly different angle. The two separate images 1, 2 sent to the brain are united in one 3D picture 3. The 3D reconstruction is linked to the images seen by both eyes, so that it is linked to some morphological aspects of the face of the viewer. That is the reason why the effect created by an artificial 3D reconstruction is a little different from what the man sees in reality, since the conditions of the taking of the pictures are not exactly the same as the human ones.

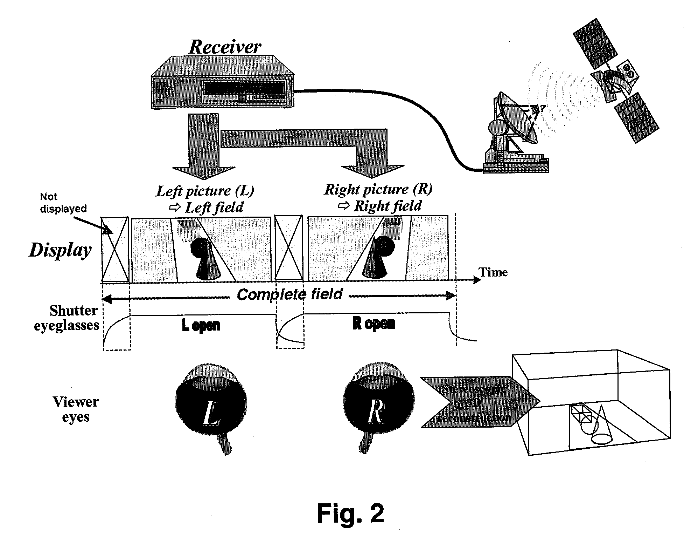

Based on that principle, it is possible to generate an artificial stereoscopic effect according to Figure 2 by sending two different views of a scene separately on the left and right eyes of the viewer. These two separate views will be called right and left images in the rest of this document.

The "field sequential" principle of stereoscopic displaying used here will be explained next.

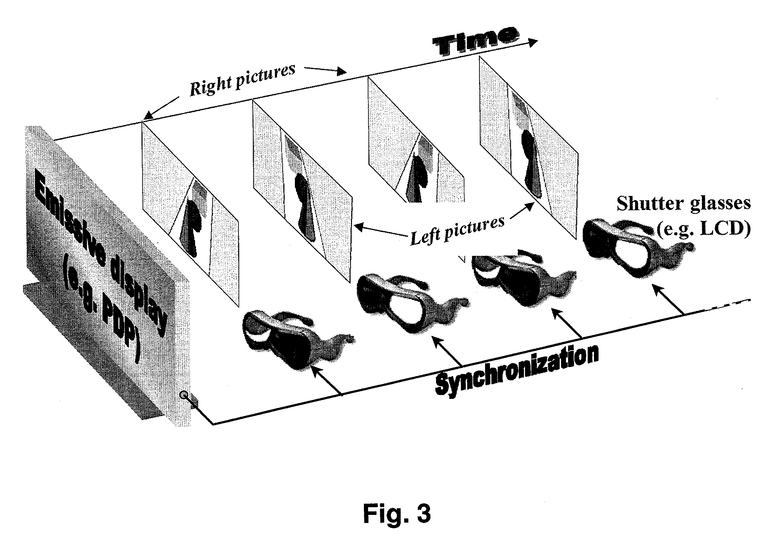

If right then left images coded in left and right fields of a complete field (Figure 2) are displayed sequentially from a source, and a synchronized shutter system in front of the eye allows the right image to only enter the right eye and conversely according to Figure 3, then a coloured stereovision can be observed.

In order to avoid a disturbing flickering effect, the frequency of the complete field should be high enough (e. g. > 60Hz). This will require the possibility to display two images (left and right) during this period so that the final frequency required at the display level is the double than for standard 2D material (e.g. > 120Hz).

The shutter can be mounted in glasses as shown in Figure 3. The shutting of the glasses is matched with a display on which two constituent pictures are presented in alternation instead of simultaneously. The glasses occlude one eye and then the other in synchronism with the image displaying. This method is often called "field sequential" and is the basic principle used in standard display (e.g. actual CRT with 3D games).

Currently, glasses using LCDs can provide good switching speed and reasonable extinction of the alternative lenses. LCD glasses consist of a very large number of elongated crystals suspended in a fluid. This reservoir is sandwiched between two thin sheets of glass. A sheet of polarizing material is bonded to the outside surfaces of both front and rear glass cover. Furthermore, each piece of glass has a transparent conductive pattern bonded to it. When an electric field is applied to the conductors, the crystals align themselves with that field so that the phase of the light transmitted between the two polarizers can be changed or not. Depending on that, the light can cross or not the second glass after receiving a defined polarization from the first one, so that glasses look transparent or opaque.

The typical electro-optical polarizing shutter available on the market today transmits only 30% of the unpolarized input light (rather than 50% for perfect polarizers) but better LCDs are under development. These new LCDs are based on Ferro-electrical materials. Some eyeglass shutter are connected by wires to the monitor, others are controlled by infrared.

The field-sequential method offers many advantages since the compatibility to standard 2D signals is ensured and no real modification of the display is mandatory. This is not the case, for instance, with other methods like polarizing screen, direct view with projection lens-filters, etc. The major requirement for the field-sequential method is only the high refresh rate (> 120Hz) that is needed.

In the following it will be shown how a plasma display panel (PDP) suits to the concept of field-sequential displaying for stereoscopy.

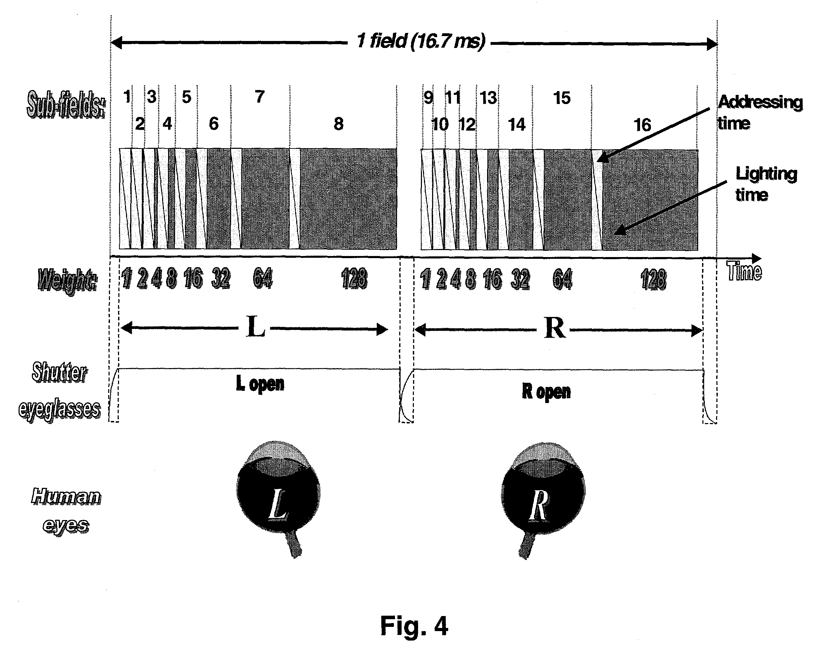

A simple method to implement a stereoscopic display is based on the separation of sub-fields into Left(L) and Right(R) groups which are synchronized with the open and close of the LCD shutter glasses. An advantage of such a method is the compatibility of the Plasma between 2D and 3D modes. This compatibility is ensured through a simple change of the sub-field encoding. Figure 4 shows a stereoscopic light emission scheme based on 16 sub-fields per frame in 60Hz mode (16.7 ms).

With this method, the left L and then right R pictures are displayed sequentially on the PDP screen, each picture being displayed with the use of 8 sub-fields. Actually, the addressing speed of plasma panels becomes fast enough to be able to spend a lot of sub-fields (around 20) for a stereoscopic application. Nevertheless, this requires the use of a reduced amount of sustain (reduced peak-white) compared to traditional 2D sequences.

Furthermore, the concept presented here offers the advantage of being simply implemented at the sub-fields level so that there is no need to modify the hardware of the display. The only additional need lies in a synchronisation output for the shutter glasses.

In the previous paragraph, a method that should enable the displaying of stereoscopic coloured pictures on the very large screen of a PDP was described. Nevertheless, a serious problem of the PDP technology appears that prevents the displaying of a good stereoscopic effect: the phosphor time response.

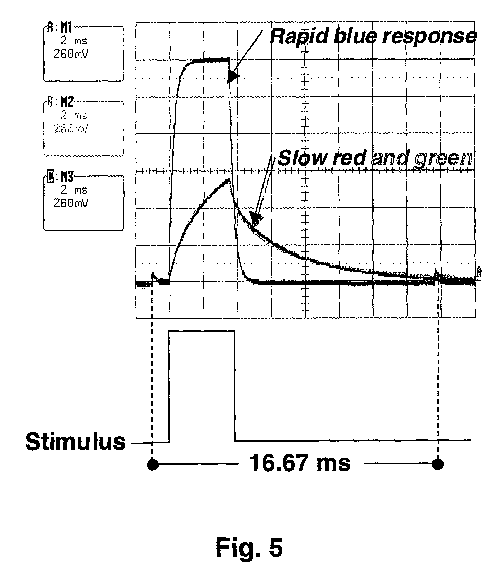

Figure 5 represents the response of the three PDP phosphors to a square UV stimulus. The blue phosphor usually reacts immediately to the stimulus whereas the red phosphor and the green phosphor have a very long reaction time. The decreasing time of these two phosphors is the most critical one. In other words, when the UV stimulus is switched OFF, the blue phosphor is switched OFF but the red and green phosphors are still emitting light (more than 5ms).

The stereoscopic effect as described above requires the left sub-fields (building the left image) to be seen only by the left eye and the right sub-fields to be seen only by the right eye. Nevertheless, as far as the green and red phosphors lag when shutting down, the right eye will perceive some parts of luminance of the left image and conversely.

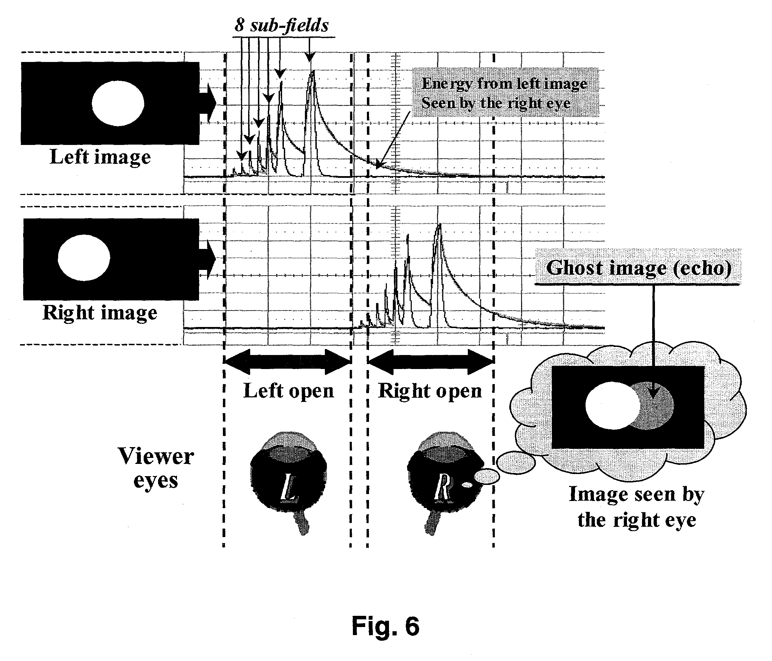

This is illustrated in Figure 6 by applying a simple field-sequential encoding as presented in Figure 5. Then, an analysis of the phosphor response time for each sub-field of the left and right images shows directly the problem of the so-called plasma ghost images.

Figure 6 shows the example of a white circle on a black background. In that case, the right eye sees a part of the white circle coming from the left image as a yellowish shadow: this is mainly called cross-talk effect or ghost image.

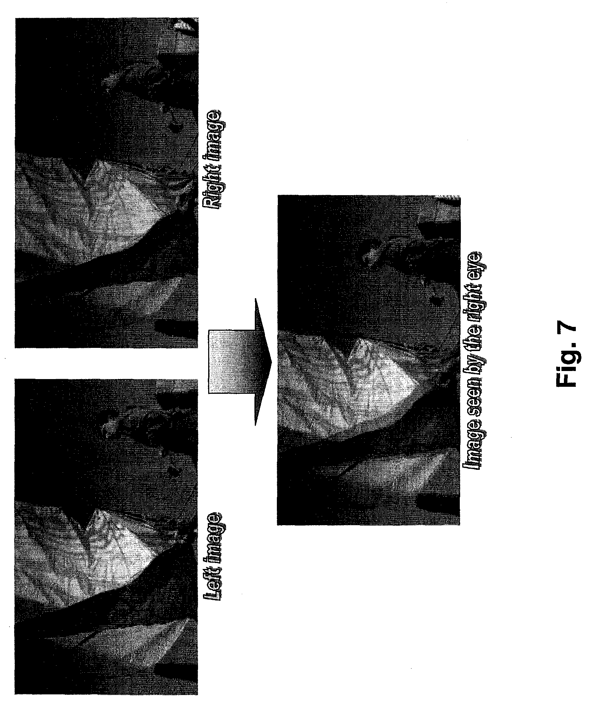

Today, at 60Hz, the phosphor lag is strong enough to forbid the stereoscopic effect. The pictures of Figure 7 illustrate this problem in the case of a natural stereoscopic sequence. When the right image of the sailor follows the left one, yellowish stripes appear on the picture to be seen by the right eye. These stripes correspond to the areas where the left image is luminous (white), whereas the right one is darker, so there is some kind of persistence of the left image on the right one.

Depending on the video level, this ghost image can be strong enough to totally inhibit the stereoscopic vision. Thus, a stereoscopic effect is not permitted with a simple field-sequential encoding of the right and left pictures with actual phosphor elements.

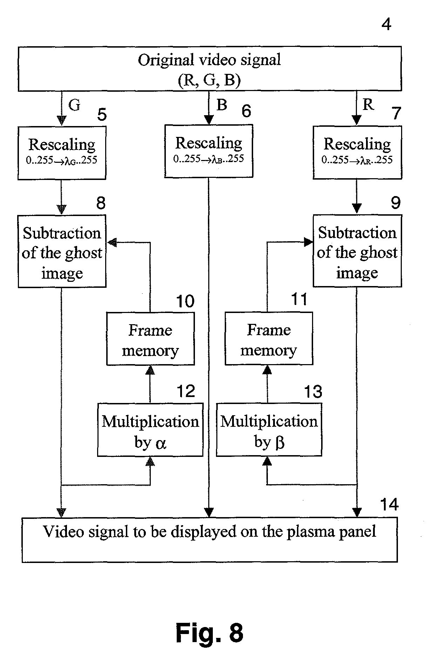

A known internal concept of the applicant shown in Figure 8 for phosphor lag effect compensation is based on the fact that a certain percentage of energy from one image lags on the next one. Then, it is possible to subtract 8, 9 this energy from the next picture 4 to prevent the ghost image. The modelization of the energy to be subtracted is quite simple in this concept since it is represented by a simple multiplying factor ($\alpha$ for green and $\beta$ for red).

However, since nothing can be subtracted from the black (level 0) an offset has to be added to the picture (corresponding the strongest possible echo). This stage will be preformed through a rescaling stage 5, 6, 7. For the subtractions 8, 9 the ghost images obtained by the multiplications 12, 13 have to be stored in frame memories 10, 11. As a result, a video signal 14 compensated for ghost images is obtained.

In this concept, the multiplying coefficients are determined experimentally and should be updated for each new panel technology and for each new coding used on the panel.

The problem of this concept is linked to the model of the echo. Indeed, the main idea is based on subtraction of the echo from the next image but the echo is not directly proportional to the video amplitude in the case of a digital display using pulse width modulation. In fact the above described concept will give the best results on an analog display or it will require fine-tuning for each modification of the coding.

Invention

In view of that it is the object of the present invention to provide a method and a device with an improved ghost image compensation.

According to the present invention this object is solved by a method for processing video data for displaying on a display means with luminous elements including the steps of providing a first video signal, adding an offset brightness value to the first video signal in order to obtain a shifted signal, calculating a ghost video signal on the basis of a second video signal preceding said first video signal and subtracting said ghost video signal from said shifted signal wherein said offset is computed on the basis of a statistical distribution of echo brightness values of the ghost image.

Furthermore, according to the present invention there is provided a device for processing video data for displaying on a display means with luminous elements having calculating means for providing a first video signal, for adding an offset brightness value to the first video signal in order to obtain a shifted signal, for calculating a ghost video signal on the basis of a second video signal preceding said first video signal and for subtracting said ghost video signal from said shifted signal wherein said offset is computable by said calculating means on the basis of a statistical distribution of echo brightness values of said ghost image.

Advantageously, the inventive technology enables to provide a coloured stereoscopic display with a limited phosphor lag. Furthermore, the present invention enables an easy implementation with standard elements being already available in integrated circuits for plasma display panels.

Preferably, the offset depends on the frequency of occurrence of echo brightness values. For such purpose a histogram of the brightness distribution of the echo signal may be computed. The frequencies of occurrence may be compared with a predetermined threshold to determine the offset. The highest echo brightness value having a frequency of occurrence below the predetermined threshold can be used as offset. Alternatively, an accumulation of the frequencies of occurrence of the highest echo brightness values up to a predetermined threshold may be computed and the lowest one of these accumulated highest echo brightness values is taken as offset. Thus, it is possible to find a good compromise between high contrast and low visibility of the ghost image.

The ghost video signal may be computed by a mathematical model describing the temporal function of an echo signal. Thus, it is not necessary to measure the ghost image but to compute in real time the ghost image at the time of displaying the next video image.

The mathematical model may consider the temporal position of the sub-fields when a sub-field coding is used for activating the luminous elements of the display. With this feature the mathematical model can be used for different codings.

Furthermore, the mathematical model may consider the opening times of shutter glasses. Thus, parts of the persistence may not be regarded for compensating the ghost image in favour of an improved contrast.

Additionally, the mathematical model may consider the colour of the luminous elements forming the ghost signal. By doing so, the typical time responses of red and green phosphor elements can be taken in consideration.

Advantageously, a hysteresis function is used for changing the offset values. Thus, it can be avoided that a permanent going up and down of the offset causes a flicker when displaying the images.

Moreover, a low pass filter should be provided for damping the temporal change of the offset values. Such low pass filter guarantees that the change of offset is sufficiently smooth.

Drawings

Exemplary embodiments of the invention are illustrated in the drawings and are explained in more detail in the following description. The drawings showing in:

Figure 1      the principle of stereoscopic vision;

Figure 2      the concept for a time sharing method;

Figure 3      a principle diagram to the sequential fields method;

Figure 4      the sequential field method applied to a PDP;

Figure 5      a time response diagram for PDP phosphor elements;

Figure 6      a principle diagram explaining the phosphor lag effect (ghost effect);

Figure 7      photos for explaining the cross-talk caused by the phosphor lag effect;

Figure 8      a block diagram of a simplified method of compensating ghost images;

Figure 9      a diagram of the echo signals for various codings;

Figure 10      a diagram of the echo signal for various video levels;

Figure 11      a comparison between the modelling and the measurement of an echo signal;

Figure 12      a diagram for timing definition;

Figure 13      a diagram for showing the usage of look-up-tables;

Figure 14      an algorithm implementation;

Figure 15      right and left pictures without compensation;

Figure 16      a right picture with an offset on red and green phosphor elements only;

Figure 17    a right picture with a neutral grey offset on the black level;

Figure 18    a right picture with an intermediate black level;

Figure 19    a variable offset depending on the highest available echo;

Figure 20    an echo analysis for the picture of Figure 7;

Figure 21    an echo analysis for another picture;

Figure 22    a circuit implementation of a 3D plasma display device;

Figure 23    a structural diagram of the ghost image compensation block; and

Figure 24    a structural diagram of an improved ghost image compensation block.

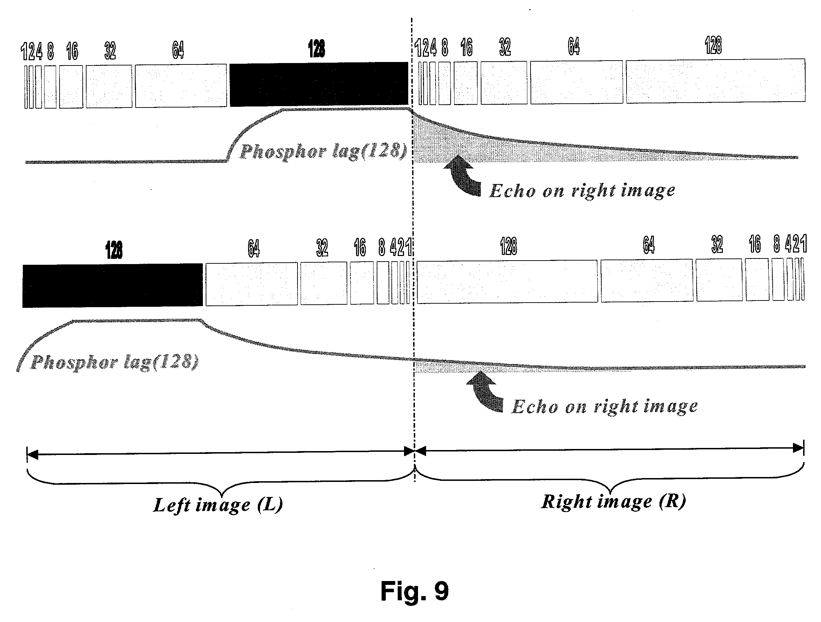

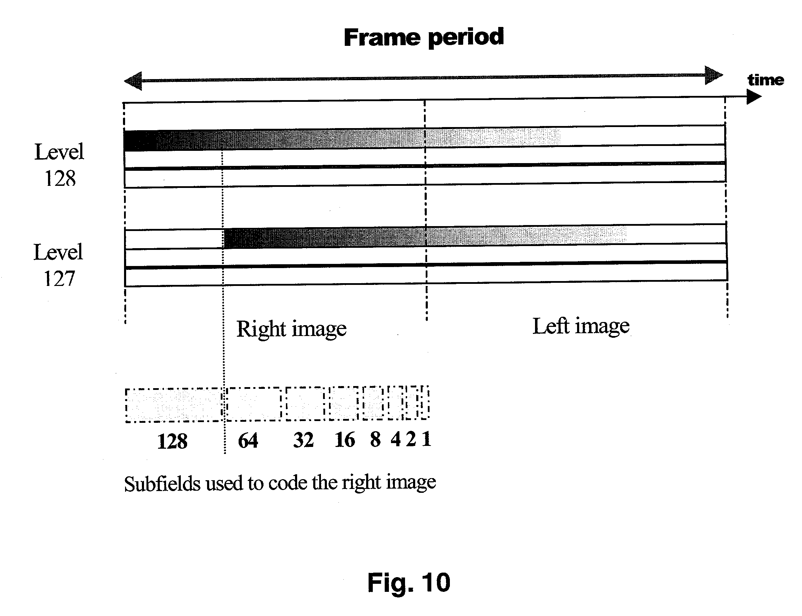

In fact, the phosphor lag effect is linked to the sub-field coding as well. This is illustrated in Figure 9 for the case of various sub-field codings used to display the video level 128 on the same panel with the same phosphors. Two binary sub-field codes are presented with respective growing order and reverse order of the bits. It is obvious that the same video level (128 on the left image in the example) would not lag with the same intensity on the other image. The echo of sub-fields activated at the beginning of a frame is lower than the echo of the same sub-field at the end of field.
Thus, in order to develop a better and more accurate model of the phosphor behaviour for various codes, a model of the phosphor behaviour should be developed. Indeed, by modeling the phosphors comportments, the echo of each sub-field can be evaluated independently. This can be done by creating a mathematical model for a sub-field and then by evaluating the percentage of energy that is still lightning on the next image by taking into account the time position of the sub-field in the frame (the later the sub-field is, the larger the echo is). With this method, the evaluation of the echo is computed with regard to the mode that is used on the display, and the evolution of the echo with the increase of the level is not compulsorily strictly increasing.
For example, with a eight sub-fields binary encoding (1 - 2 - 4 - 8 - 16 - 32 - 64 - 128), one can have the echo of the level 128 (created by lightning the sub-field 128), which is lower than the one of the level 127 (created by lightning the seven other sub-fields) if the sub-fields are arranged in a decreasing order in the frame as shown in Figure 10. The two video levels having nearly equal values (127 and 128) use two completely different groups of sub-fields so that their echo on the next image is really different. Indeed, in this example, the video level 127 will introduce much more echo than the level 128. This explains also why the modelization with a multiplying factor as presented in the introductory part of the present description is not accurate enough.
On some panels, the red and green signal undergo the same process, but it is possible to model the comportment of this two different phosphors separately so that the echo for the same level can be different considering the red or the green phosphor.
A general model for a sub-field having the weight $SF_{weight}$ will be defined as following:

$$f(t) = \frac{SFweight}{A} * \exp(-B * t^C)$$

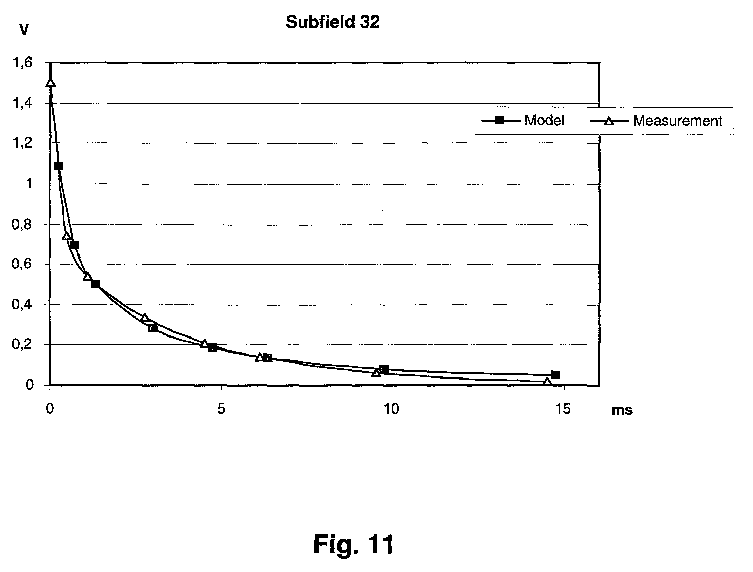

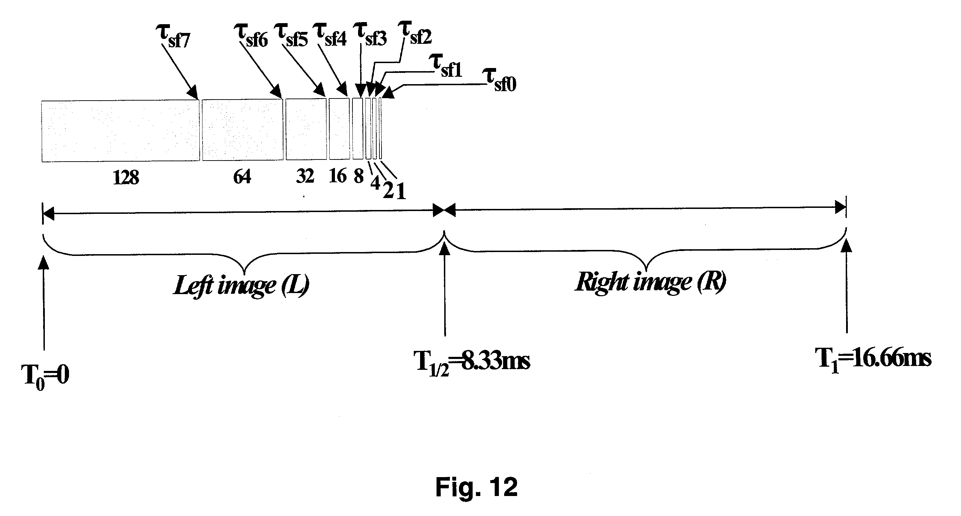

The various parameters A, B and C are evaluated experimentally for a specific phosphor composition. They are mainly different for the red and the green. The comparison of such a model with the experiments for a sub-field having a 32 sustains is shown in Figure 11. Based on this model, it is possible to define the echo of a specific sub-field from every code. Figure 12 presents the timing of the code used in the further explanations. It shall be assumed that the light emission of each sub-field n is stopped at time position $\tau_n$. In Figure 12 the idle time of each sub-field linked to the addressing period is not represented to improve the readability of the figure. Then, this position $\tau_n$ represents the beginning of the lag time modelized in Figure 11.
The opening of the glasses is done at $T_{1/2}$ in the present example based on 60 Hz frame frequency. Therefore, one can define the echo of each sub-field as following:

$$echo(SF_n) = \int_{t=T_{1/2}}^{t=T_1} \frac{SFweight}{A} \cdot \exp\left(-B \times (t-\tau_n)^C\right) \cdot dt$$

This echo is defined as the surface of the lag curve emitted during the period linked to the right eye, which means the integral between $T_{1/2}$ and $T_1$ of a lag effect starting, for each sub-field $SF_n$ at position $\tau_n$.

Below, there is presented an example of values obtained on a current typical PDP for a 8 sub-field binary reverse code (figure 12) for the green phosphor:

    Echo(SF0[1])=0.42
    Echo(SF1[2])= 0.78
    Echo(SF2[4])=1.254
    Echo(SF3[8])=2.0663
    Echo(SF4[16])=3.476
    Echo(SF5[32])=5.952
    Echo(SF6[64])=10.384
    Echo(SF7[128])=18.57

It shall be assumed that the echo of a level is equal to the sum of the echoes of the sub-fields that are used to create this level. In that case, a PDP using n sub-fields per subframe (right or left image) will require the modelization, including time position, of the n sub-fields only. Moreover, the three parameters A, B and C are computed only one time for a specific new phosphor. Later on, even if the code is changing, these three values are stable, which reduces the time effort required to adapt the algorithm to new coding. Consequently, in order to estimate the echo of each level, one just has to sum the echoes of the sub-fields that compose the level.

For instance, in the case of a binary code, level 19 is obtained by lighting the sub-fields 16, 2 and 1. Thus, the echo of the video level 19 is the sum of the echo from level 1, 2 and 16. Echo(19) = Echo(16)+Echo(2)+Echo(1) = 3.476+0.78+0.42 = 4.676 in this example.

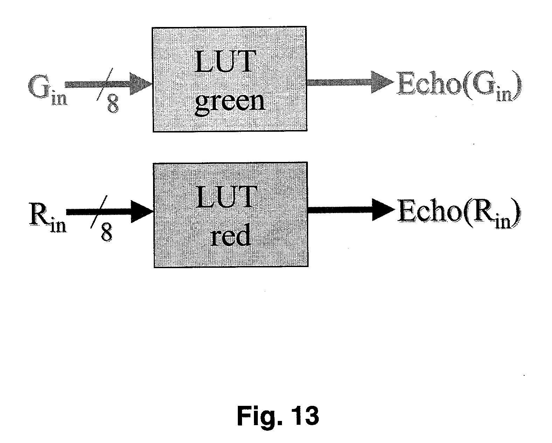

This will lead to the computation of two LUTs (Look-Up-Table), one for the red and one for the green phosphor that give, for each input level, the amplitude of the echo as shown in Figure 13.

Then by knowing exactly the level of the echo, it is possible to subtract this echo from the next image so that no echo will be visible. However, if the level to be displayed in the second image is lower than the echo from the first image, it will not be possible to do the subtraction. So the level of the black has to be increased by making an offset on the images. In fact, in order to have an "uncoloured" black, the same offset has to be applied to the three components of the image. Finally, this offset will correspond to the highest echo from a picture: the echo of the white. In the above example Echo(255) = 0.42+0.78+1.254+2.0663+3.476+5.952+10.384+18.57 = 42.9023. This, however, leads to a strong reduction of the contrast.

In this example, the final contrast ratio becomes

$$\frac{255}{42.9} \approx 6:1.$$

However, no echo can be visible and a perfect coloured three dimensional picture can be observed. Furthermore, for game applications (e.g. Xbox) the reduction of the contrast is not a major issue compared to other applications like video. Another aspect of this concept is that it is easily adaptable to new materials, so that when new phosphors could be found with faster reaction, the contrast will be improved as well.

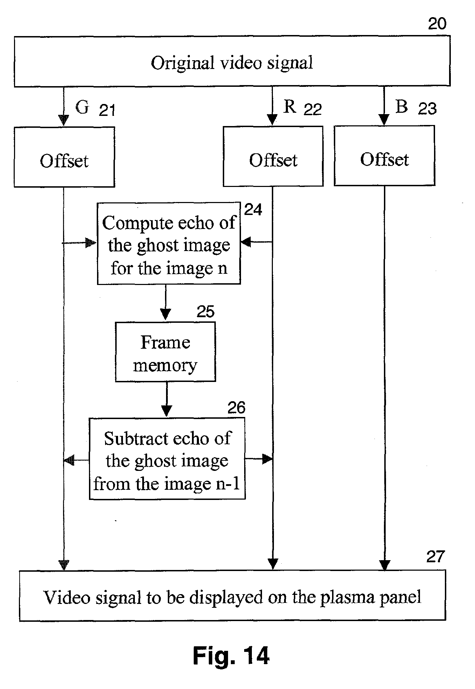

In Figure 14 a possible implementation of the concept is presented. The right and the left images are processed successively. The first operation on the original video signal 20 is the same for the three components (blue, red, green) that means that for each of the three signals a specific value 21, 22, 23 (offset) is added. Next, the red and green components R, G are modified in the same way. First the echo of the current image (image n) is computed in block 24, then it is stored in memory 25 and after that from the image n the previously computed echo from image n-1 is subtracted in block 26 to obtain the resulting video signal 27. On the blue signal B a ghost image reduction is not performed.

Concerning the reduction of the contrast, an improvement of the phosphor behaviour by a factor of two (two times faster) will generate the following echo:

Echo' (SF0[1]) = 0.195
Echo' (SF1[2]) = 0.362
Echo' (SF2[4]) = 0.51
Echo' (SF3[8]) = 0.746
Echo' (SF4[16]) = 1.128
Echo' (SF5[32]) = 1.75
Echo' (SF6[64]) = 2.798
Echo' (SF7[128]) = 4.652
Then the new highest echo is Echo'(255) = 0.195+0.362+0.51+0.746+1.128+1.75+2.798+4.652 = 13.141.

Consequently, the new contrast ratio becomes

$$\frac{255}{13.141} \approx 19{:}1$$

which represents an improvement by a factor higher than 3.

The utilization of Echo(255) as a stable offset is the most simple concept. Now, an improved version based on an adaptable offset will be presented.

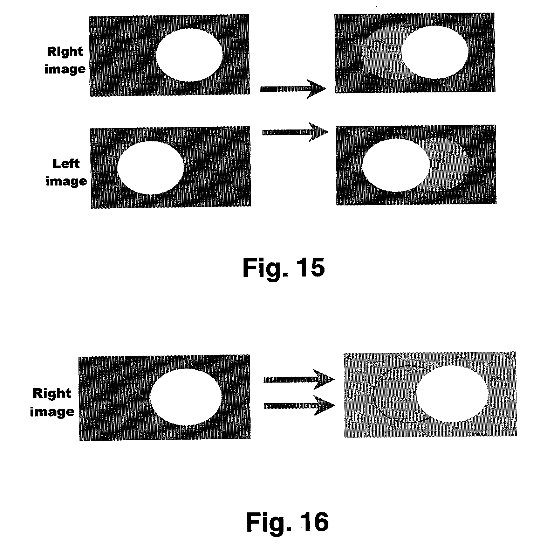

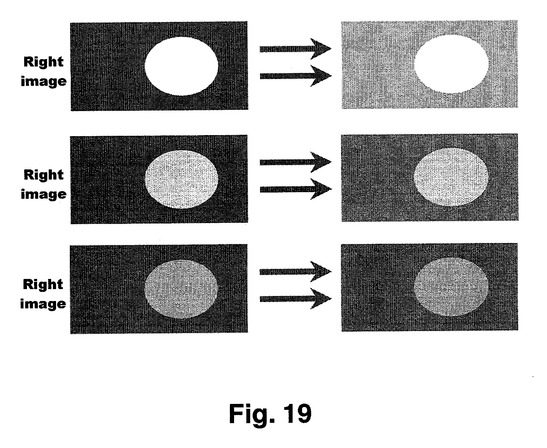

First of all, experiments have shown that an echo of 5% could be accepted by the viewer without having dramatic impact on the stereoscopic effect so that the offset can be limited to 95% of Echo(255). Following Figures 15 and 19 illustrate such concept.

Figure 15 shows similar to Figure 7 a phosphor lag effect for stereoscopic display without compensation. The right image consists of a white circle on a black background, wherein the white circle is arranged at the right side of the frame. The left image consists of the same white circle being arranged at the left side of the image. The right eye will see the right image and a yellowish ghost image of the left image as illustrated in Figure 15 at the top of the right side. Similarly, the left eye will see the left image and a yellowish ghost circle of the right image as illustrated at the bottom of the right side in Figure 15.

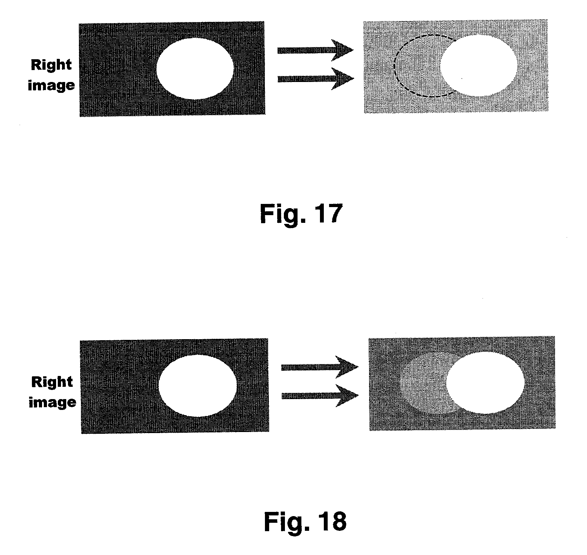

Figure 16 shows that an offset added on the right and green component only is sufficient enough so that the ghost circle disappears but the colour shift providing a yellowish background is not acceptable. The offset should be added equally on the three colours as shown in Figure 17 so that a grey background is provided. However, in that case the contrast is quite poor.

As already said, a slight echo can be accepted so that the offset level could be decrease by 5% as shown in Figure 18. The black background is shifted to a dark grey background and the ghost circle of the left image is a little bit yellowish or greenish. However, such a light ghost circle does not affect 3D impression.

Ideally, in order to have no ghost image, it is sufficient to choose an offset equal to the highest echo located in a picture. Indeed, if a picture does not contain any high white level, the highest echo is limited and the offset can be limited as well. This is illustrated in Figure 19. In other words, in the example at the top of Figure 19 the brightness of the white circle is very high so that a corresponding high echo level leads to a high offset and a corresponding low contrast. In the example below the brightness of the white circle is reduced and, therefore, also the offset is reduced. In the example at the bottom of the Figure 19 the brightness of the white circle is low and, consequently also the offset is very low, so that the contrast can nearly be maintained.

The first improved concept will define the offset at time t as the highest available echo from frame t as following: $Offset(t) = Max_{x,y}[Echo(Pixel(x,y,t))]$.

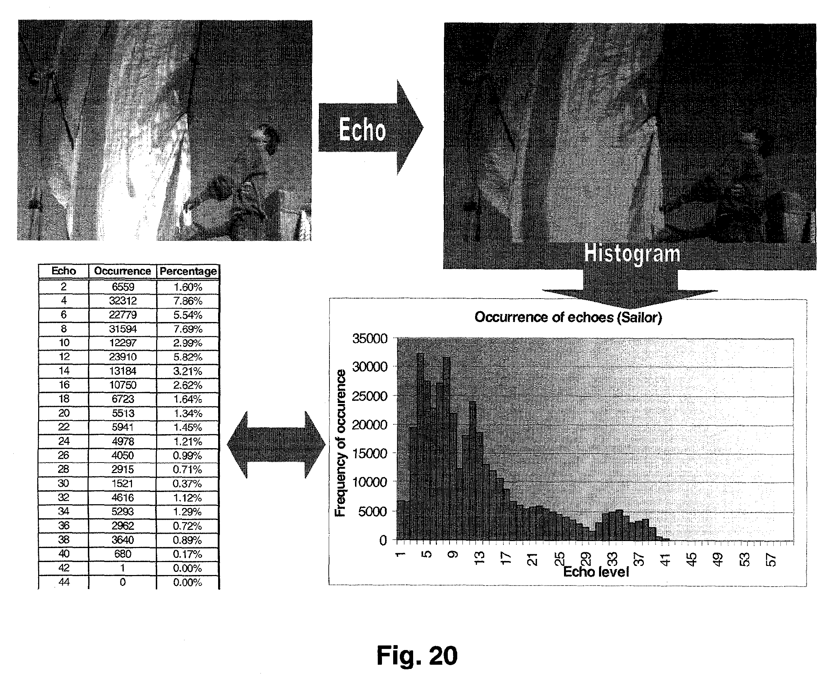

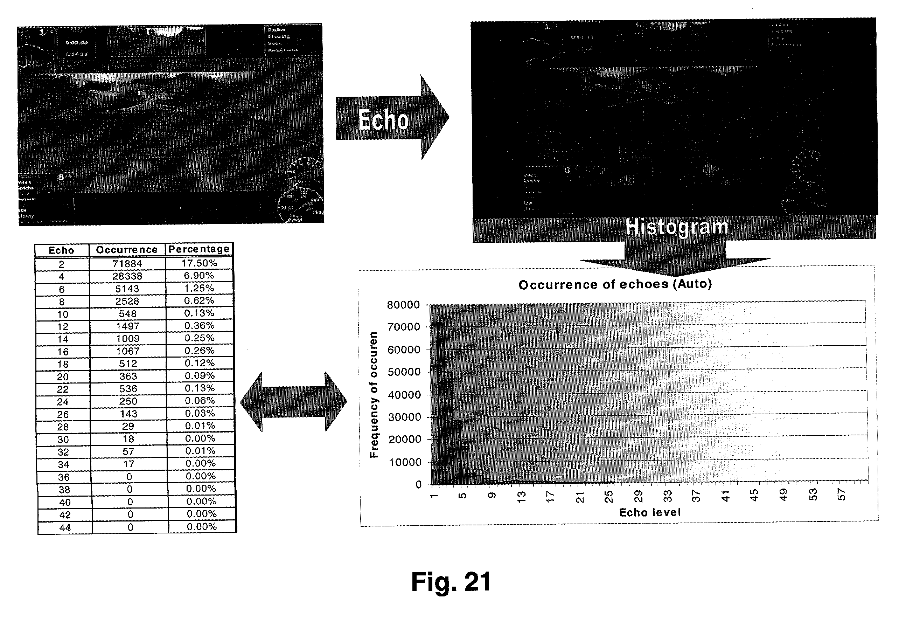

However, this concept can be further improved. Indeed, if there is only a very small area with the level 255, an echo in this area can be accepted and the offset should be better computed based on a more relevant maximal level. To do that, a second improvement consists in computing the offset by using an histogram of all produced echoes from a frame. This is illustrated in Figures 20 and 21 for two stereoscopic sequences: "Sailor" and "Auto". For both examples, the images of greenish echoes have been enhanced by a factor of 10 to make them more readable (echo=12 represented by video level 120) .

Figure 20 represents the computed echoes from the sequence "sailor". A histogram of the echo values shows their statistical distribution. The picture contains 856x480=410880 pixels. On the bottom left of the picture, the histogram information are detailed.

Now, there are two possibilities to select the optimal offset of the picture:

- Select the highest echo ECHmax1 representing more than M% of the picture. If one chooses M=0.25%, then offset = 39 for the picture "Sailor" since Echo(39)=0.53% > 0.25% whereas echo(40..43) < 0.25%. However, this concept does not give any indication about the total amount of echo that is accepted per picture. This corresponds only to a vertical limit set in the histogram.

- Select the highest echo ECHmax2 so that the accumulation of all echoes higher than ECHmax2 are below a predetermined limit N%. For instance if one chooses N=1% (1% of the picture is polluted by a residual echo) then also offset=39 since

  0.00(43)+0.00(42)+0.08(41)+0.17(40)+0.53(39)+0.89(38) = 1.66% > 1% whereas

  0.00(43)+0.00(42)+0.08(41)+0.17(40)+0.53(39)= 0.77% < 1%. This represents a limit on the surface of the histogram.

In that case, the black level has been reduced from 42 to 39 that represents an increase of 7.7% of the contrast.

Figure 21 represents the computed echoes from the sequence "Auto". A histogram of the echo values shows their statistical distribution. The picture contains 856×480=410880 pixels. On the bottom left of the picture, the histogram informations are detailed again. One can see that the statistical distribution is much more in favour of an offset optimization than the previous sequence.

If still M=0.25% is chosen, then offset = 16 for the picture "Auto" since all echo higher than 16 represent each time less than 0.25%. However, this concept does not give any indication about the number of an echo that is accepted per picture.

If one again chooses N=1% (1% of the picture is polluted by a residual echo) then offset=18 is obtained.

In this last example, one can see that the offset selected by the both methods does not give the same result. Indeed, if M=0.25% is acceptable, this leads to an offset of 16, which introduces 1.33% of overall picture polluted. This is the reason why the second concept is preferred while being also a bit more complicated to implement.

In the second solution, since the black level has been reduced from 42 to 18 that represents an increase of 133% of the contrast.

The advantage of this concept is that the level of the echo is chosen depending on the current picture. However, since the black level will depend on this offset a hysteresis function should be used in order to avoid any pumping or oscillation in the black level. So a highly frequent going up and down of the black level, for instance caused by noise, is avoided.

Furthermore, a temporal low-pass filtering of the black level should be used additionally in order to avoid any visible change in the black level. The low-pass guarantees that the change of the black level in one direction is not too fast.

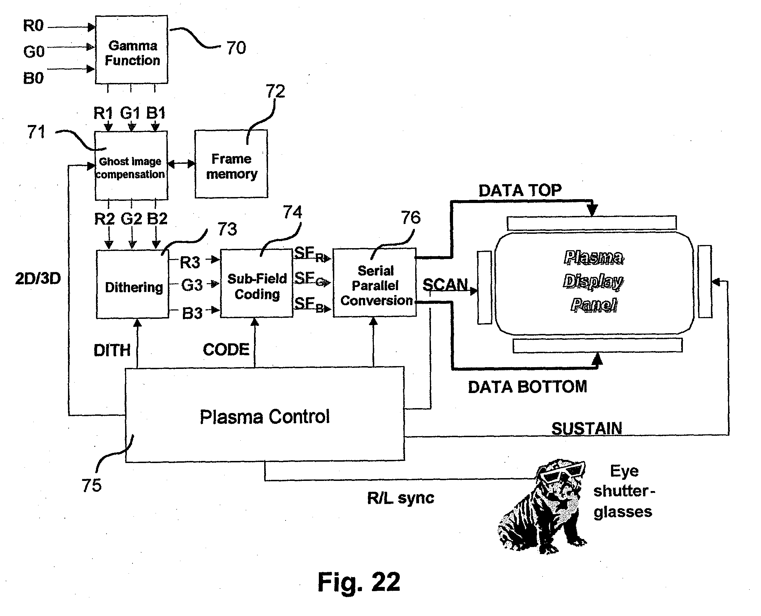

Figure 22 illustrates a possible implementation of the algorithm for ghost image compensation. RGB input pictures indicated by the signals R0, G0 and B0 are forwarded to a gamma function block 70. It can consist of a look up table (LUT) or it can be formed by a mathematical function. The outputs $R_1$, $G_1$ and $B_1$ of the gamma function block 70 are forwarded to a ghost image compensation block 71 which may be structured according to Figure 14. Calculated ghost images of preceding images are stored in frame memory 72. For compensation a stored ghost image is read out from frame memory 72 by the ghost image compensation block 71. The compensated signals are indicated by R2, G2 and B2.

These compensated signals R2, G2 and B2 are provided for a dithering block 73 in order to perform a well-known dithering procedure.

The video signals R2, G2 and B2 subjected to the dithering in the dithering block 73 are output as signals R3, G3, B3 and are forwarded to a sub-field coding unit 74 which performs sub-field coding under the control of the control unit 75. The plasma control unit 75 provides the code for the sub-field coding unit 74. Furthermore, the plasma control unit 75 provides a controlling signal DITH for the dithering unit 73 and also a controlling signal 2D/3D for the ghost image compensation unit 71 which can be switched off for 2D-display.

As to the sub-field coding it is expressively referred to the European patent application EP-A-1 136 974.

The sub-field signals for each colour output from the sub-field coding unit 74 are indicated by reference signs $SF_R$, $SF_G$, $SF_B$. For plasma display panel addressing, these sub-field code words are converted from serial signals to parallel signals which can be used for the linewise PDP addressing as indicated in Figure 22 by the signals DATA TOP and DATA BOTTOM. This is carried out in a serial to parallel conversion unit 76 which is itself controlled by the plasma control unit 75.

Furthermore, the control unit 75 generates all scan and sustain pulses for PDP control. It receives horizontal and vertical synchronizing signals for reference timing. Moreover, the plasma control unit 75 provides a R/L sync signal for controlling eye shutter-glasses.

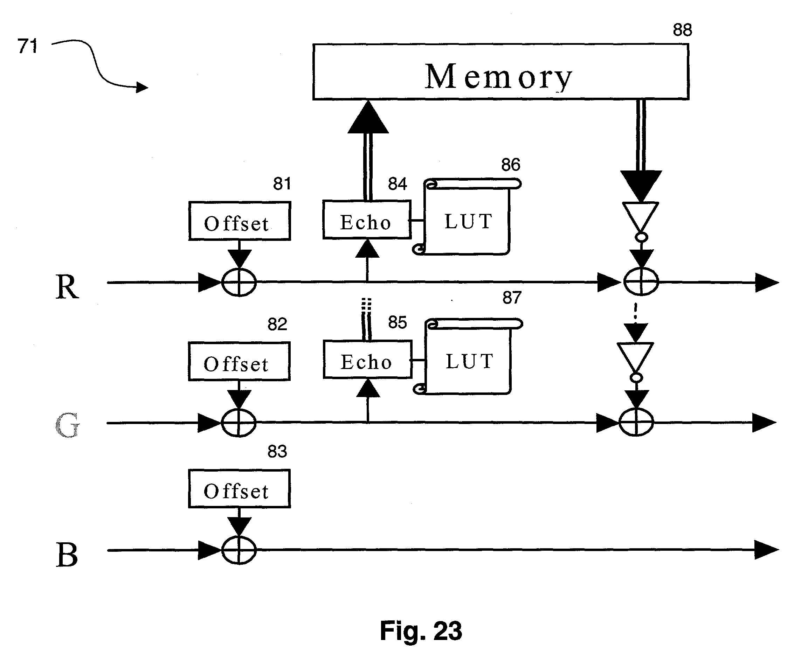

A block diagram corresponding to the "Ghost image compensation" block 71 is shown in Figure 23. The input signal R, G, B coming from the gamma block 70 will be modified first by applying an offset 81, 82, 83 equally to all signals. In a first concept, there is assumed that the offset 81, 82, 83 is fixed. Then, the echoes 84, 85 for the red and green parts of the picture are computed by means of a LUT (Look-Up-Table) 86, 87 as described Figure 23. These echoes 84, 85 are stored in a memory 88 and read later on (with one frame delay). The read echoes are than subtracted from the incoming signals before being displayed.

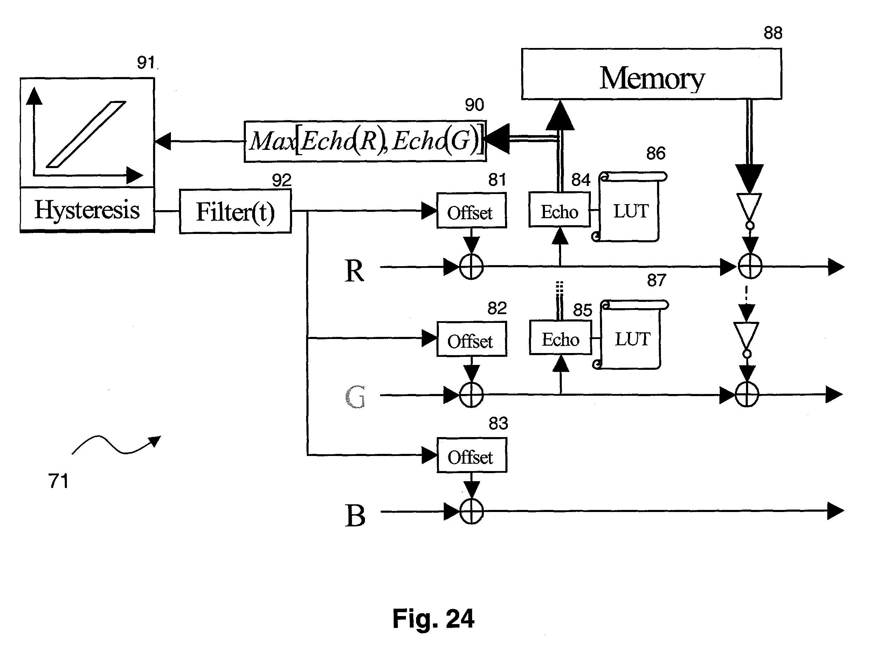

A possible implementation of the inventive concept is based on an automatic offset computation as shown in Figure 24. The basic structure of the ghost image compensation block 71 is similar to that of Figure 23. Therefore, the blocks with the same reference numbers correspond with each other. Additionally to the structure of Figure 23 the ghost image compensation block 71 of Figure 24 provides a maximum block 90, wherein the highest echo per frame for both red and green colours is selected. The output of this maximum block 90 is input to a hysteresis block 91 to eliminate an oscillation of the maximum echo value. The output of block 91 is input to a temporal low pass filter 92 so that the change of the maximum echo value is sufficiently smooth. The output of filter 92 is used as offset 81, 82, 83 for the three colours.

The offset computation can be done by the three manners explained in the previous parts of this document:

- Simple selection of the maximal value as performed in block 90 of Figure 24.

- First concept based on a histogram and a limit M representing a vertical limit in the histogram.

- Second concept based on a histogram and an accumulation of occurrence based on a limit N representing a surface in the histogram.

It is important to remark that the update of a new value "Offset" will occur only at the beginning of a new frame in order to have a homogeneous black area.

The present invention is applicable to all displays useable for stereoscopy suffering from Phosphor delay time (i.e.: LCD, LCO, etc.).

**Claims**

1. Method for processing video data for displaying on a display means with luminous elements including the steps of providing a first video signal (20),
   adding an offset brightness value (21, 22, 23) to the first video signal in order to obtain a shifted signal,
   calculating a ghost video signal (24) on the basis of a second video signal preceding said first video signal and subtracting said ghost video signal (26) from said shifted signal
   **characterized in that**
   said offset (21, 22, 23) is computed on the basis of a statistical distribution of echo brightness values of the ghost image.

2. Method according to claim 1, wherein said offset (21, 22, 23) depends on the frequency of occurrence of echo brightness values.

3. Method according to claim 2, wherein the frequency of occurrence is compared with a predetermined threshold for the determination of said offset.

4. Method according to claim 3, wherein the highest echo brightness value having a frequency of occurrence below said predetermined threshold is used as offset.

5. Method according to claim 3, wherein the frequencies of occurrence of the highest echo brightness values are accumulated until a predetermined threshold is reached and the lowest one of these accumulated highest echo brightness values is taken as offset.

6. Method according to one of the claims 1 to 5, wherein a ghost video signal is computed by a mathematical model describing the temporal function of an echo signal.

7. Method according to claim 6, wherein said mathematical model considers the temporal position of sub-fields when sub-field coding is used for activating said luminous elements.

8. Method according to claim 6 or 7, wherein said mathematical model considers opening times of shutter glasses.

9. Method according to one of the claims 6 to 8, wherein said mathematical model considers the colour of the luminous elements forming the ghost video signal.

10. Method according to one of the claims 1 to 9, wherein a hysteresis function (91) is used for changing offset values.

**11.** Method according to one of the claims 1 to 10, wherein a temporal low pass function (92) is used for changing offset values.

**12.** Device for processing video data for displaying on a display means with luminous elements with calculating means (71) for providing a first video signal, for adding an offset brightness value (81, 82, 83) to the first video signal in order to obtain a shifted signal, for calculating a ghost video signal on the basis of a second video signal preceding said first video signal and for subtracting said ghost video signal from said shifted signal **characterized in that**
said offset (81, 82, 83) is computable by said calculating means (71) on the basis of a statistical distribution of echo brightness values of said ghost image.

**13.** Device according to claim 12, wherein said offset is calculable by said calculating means as the highest echo brightness value having a frequency of occurrence below said determined threshold.

**14.** Device according to claim 12, wherein said calculating means (71) includes accumulation means for accumulating the frequencies of occurrence of the highest echo brightness values until a predetermined threshold is reached and for setting the lowest one of these accumulated highest echo brightness values as offset.

**15.** Device according to one of the claims 12 to 14, wherein said calculating means (71) includes modelling means describing the temporal function of an echo signal for computing said ghost video signal.

**16.** Device according to claim 15, wherein the temporal position of a sub-field within a frame is regardable by said modelling means.

**17.** Device according to one of the claims 12 to 16, wherein hysteresis means (91) are included in said calculating means (71) for temporarily forming said offset.

**18.** Device according to one of the claims 12 to 17, wherein low pass means (92) are integrated in said calculating means for temporarily forming said offset.

Stereoscopic 3D
interpretation in the brain

Fig. 1

Fig. 2

Fig. 3

Fig. 4

Fig. 5

8 sub-fields

Left image

Right image

Energy from left image
Seen by the right eye

Ghost image (echo)

Left open    Right open

Viewer
eyes

L    R

Image seen by
the right eye

**Fig. 6**

Right image

Left image

Image seen by the right eye

Fig. 7

4

Original video signal
(R, G, B)

G    5          B    6          R    7

Rescaling
0..255→λG..255

Rescaling
0..255→λB..255

Rescaling
0..255→λR..255

8

Subtraction
of the ghost
image

9

Subtraction
of the ghost
image

10

Frame
memory

11

Frame
memory

12

Multiplication
by α

13

Multiplication
by β

14

Video signal to be displayed on the plasma panel

**Fig. 8**

124 8 16 32 64 128    124 8 16 32 64 128

*Phosphor lag(128)*

*Echo on right image*

128 64 32 16 8 4 2 1    128 64 32 16 8 4 2 1

*Phosphor lag(128)*

*Echo on right image*

*Left image (L)*    *Right image (R)*

**Fig. 9**

EP 1 460 611 A1

**Frame period**

time

Level 128

Level 127

Right image          Left image

128   64   32   16   8 4 2 1

Subfields used to code the right image

**Fig. 10**

**Subfield 32**

Fig. 11

EP 1 460 611 A1

Fig. 12

Fig. 13

Original video signal — 20

G 21 — Offset

R 22 — Offset

B 23 — Offset

24 — Compute echo of the ghost image for the image n

25 — Frame memory

26 — Subtract echo of the ghost image from the image n-1

27 — Video signal to be displayed on the plasma panel

**Fig. 14**

Fig. 15

Right
image

Left
image

Fig. 16

Right
image

**Fig. 17**

**Fig. 18**

Fig. 19

| Echo | Occurrence | Percentage |
|------|-----------|-----------|
| 2 | 6559 | 1.60% |
| 4 | 32312 | 7.86% |
| 6 | 22779 | 5.54% |
| 8 | 31594 | 7.69% |
| 10 | 12297 | 2.99% |
| 12 | 23910 | 5.82% |
| 14 | 13184 | 3.21% |
| 16 | 10750 | 2.62% |
| 18 | 6723 | 1.64% |
| 20 | 5513 | 1.34% |
| 22 | 5941 | 1.45% |
| 24 | 4978 | 1.21% |
| 26 | 4050 | 0.99% |
| 28 | 2915 | 0.71% |
| 30 | 1521 | 0.37% |
| 32 | 4616 | 1.12% |
| 34 | 5293 | 1.29% |
| 36 | 2962 | 0.72% |
| 38 | 3640 | 0.89% |
| 40 | 680 | 0.17% |
| 42 | 1 | 0.00% |
| 44 | 0 | 0.00% |

Echo

Histogram

Occurrence of echoes (Sailor)

Fig. 20

| Echo | Occurrence | Percentage |
|------|-----------|-----------|
| 2 | 71884 | 17.50% |
| 4 | 28338 | 6.90% |
| 6 | 5143 | 1.25% |
| 8 | 2528 | 0.62% |
| 10 | 548 | 0.13% |
| 12 | 1497 | 0.36% |
| 14 | 1009 | 0.25% |
| 16 | 1067 | 0.26% |
| 18 | 512 | 0.12% |
| 20 | 363 | 0.09% |
| 22 | 536 | 0.13% |
| 24 | 250 | 0.06% |
| 26 | 143 | 0.03% |
| 28 | 29 | 0.01% |
| 30 | 18 | 0.00% |
| 32 | 57 | 0.01% |
| 34 | 17 | 0.00% |
| 36 | 0 | 0.00% |
| 38 | 0 | 0.00% |
| 40 | 0 | 0.00% |
| 42 | 0 | 0.00% |
| 44 | 0 | 0.00% |

**Fig. 21**

EP 1 460 611 A1

Fig. 22

**Fig. 23**

EP 1 460 611 A1

**Fig. 24**

**European Patent Office**

## EUROPEAN SEARCH REPORT

Application Number

EP 03 29 0658

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 532 008 B1 (GURALNICK BRIAN) 11 March 2003 (2003-03-11) * column 6, line 30 - line 35; figure 10 * | 1,12 | G09G3/28 H04N13/00 |
| Y | * column 6, line 36 - line 51; figure 11 * * column 6, line 52 - column 7, line 36; figure 12 * * column 8, line 21 - line 27 * * column 8, line 28 - line 54 * --- | 6-9,15, 16 | |
| X | WEITBRUCH SEBASTIEN ET AL: "New encoding algorithm for 3-D stereoscopic plasma displays" J SOC INF DISP;JOURNAL OF THE SOCIETY FOR INFORMATION DISPLAY 2003, vol. 11, no. 1 SPEC., 2003, pages 71-78, XP008021167 | 1,12 | |
| Y | par 3.3 PDP phosphor behavior and stereoscopy par 4.2 New stereoscopic encoding method --- | 6-9,15, 16 | |
| A | LACOTTE B: "Elimination of keystone and crosstalk effects in stereoscopic video" RAPPORT TECHNIQUE DE L'INRS-TELECOMMUNICATIONS, XX, XX, 22 December 1995 (1995-12-22), pages 1-27, XP002190026 par 4.2 Crosstalk elimination --- -/-- | 1-18 | TECHNICAL FIELDS SEARCHED (Int.Cl.7) H04N |

The present search report has been drawn up for all claims

| Place of search | Date of completion of the search | Examiner |
|---|---|---|
| THE HAGUE | 15 September 2003 | De Paepe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 460 611 A1**

**European Patent Office**

**EUROPEAN SEARCH REPORT**

Application Number

EP 03 29 0658

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KONRAD J ET AL: "CANCELLATION OF IMAGE CROSSTALK IN TIME-SEQUENTIAL DISPLAYS OF STEREOSCOPIC VIDEO" IEEE TRANSACTIONS ON IMAGE PROCESSING, IEEE INC. NEW YORK, US, vol. 9, no. 5, May 2000 (2000-05), pages 897-908, XP000958401 ISSN: 1057-7149 * the whole document * | 1-18 | |
| A | EP 1 271 965 A (THOMSON BRANDT GMBH) 2 January 2003 (2003-01-02) * the whole document * | 1-18 | |

TECHNICAL FIELDS SEARCHED (Int.Cl.7)

The present search report has been drawn up for all claims

| Place of search | Date of completion of the search | Examiner |
|---|---|---|
| THE HAGUE | 15 September 2003 | De Paepe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

**ANNEX TO THE EUROPEAN SEARCH REPORT
ON EUROPEAN PATENT APPLICATION NO.**                    EP 03 29 0658

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2003

| Patent document cited in search report | | Publication date | Patent family member(s) | | Publication date |
|---|---|---|---|---|---|
| US 6532008 | B1 | 11-03-2003 | AU<br>WO | 3908101 A<br>0169944 A2 | 24-09-2001<br>20-09-2001 |
| EP 1271965 | A | 02-01-2003 | EP<br>CN<br>EP<br>JP<br>US | 1271965 A1<br>1394084 A<br>1271966 A1<br>2003070025 A<br>2002196199 A1 | 02-01-2003<br>29-01-2003<br>02-01-2003<br>07-03-2003<br>26-12-2002 |

EPO FORM P0459

For more details about this annex : see Official Journal of the European Patent Office, No. 12/82